# EUROPEAN PATENT APPLICATION

(11) **EP 3 932 616 A1**
(43) Date of publication of application: **05.01.2022**
(21) Application number: 21181690.5
(22) Date of filing: 25.06.2021
(51) Int. Cl.: B25B 5/00, B25B 5/10, B25H 1/00

(54) **APPARATUS AND METHOD FOR HOLDING AND/OR USING A TOOL**

(30) Priority: 30.06.2020 US 202016946669
(71) Applicant: Gulfstream Aerospace Corporation, Savannah, Georgia 31402 (US)
(72) Inventor: MARTINEZ, Jose Antonio, Savannah, 31402 (US); SERRANO, Salvador, Savannah, 31402 (US)
(74) Representative: LKGlobal UK Ltd.

(57) **Abstract**

Apparatuses for holding a tool used for performing a task and methods for performing a task are provided. In one example, the apparatus includes a movable base that is configured to move along a floor surface. A multi-axis arm is coupled to the movable base and is configured to pivotally move in multiple directions. A holding member is coupled to the multi-axis arm and is configured to hold the tool in a position and while moving the tool by moving the movable base and/or pivotally moving the multi-axis arm.

## Description

### TECHNICAL FIELD

The technical field relates generally to an apparatus for holding and/or using a tool, and more particularly, relates to an apparatus for holding a tool and that is configured to ergonomically assist in using the tool to perform a task, such as, for example, assembling wire harnesses, or other components, subassemblies, assemblies or the like, and a method for using a tool to perform such a task.

### BACKGROUND

Aircraft and other vehicles include various components, subassemblies, and/or assemblies. For instance, aircraft employ wire harnesses that include a plurality of wires for providing electrical communication between the various electronic components, vehicle devices and/or the like.

Assembling wire harnesses can be a labor-intensive process requiring relatively long cycle times for fabricating the wire harness. As such, it is important that a process for assembling wire harnesses be relatively efficient and ergonomically friendly. Mechanics or production personnel who are assembling wire harnesses typically need to cut wires, crimp contacts and connectors, and/or the like. Advantageously, these worker often use pneumatic tools to assist in performing such tasks to reduce time and improve economics versus manually cutting and crimping. Unfortunately, many such tools are relatively heavy and using these tools for an extended period of time, for example up to 2 hours or more continuously, including the mechanic manually holding the pneumatic tool in one hand and a wire(s) that needs to be cut and/or crimped in the other hand, can create an ergonomic risk to the worker.

Accordingly, it is desirable to provide apparatuses that address one or more of the foregoing issues, and methods for using such apparatuses. Furthermore, other desirable features and characteristics of the various embodiments described herein will become apparent from the subsequent detailed description and the appended claims, taken in conjunction with the accompanying drawings and this background.

### SUMMARY

Various non-limiting embodiments of an apparatus for holding a tool used for performing a task, and various non-limiting embodiments of a method for using a tool to perform a task, are provided herein.

In a first non-limiting embodiment, the apparatus includes, but is not limited to, a movable base that is configured to move along a floor surface. The apparatus further includes, but is not limited to, a multi-axis arm that is coupled to the movable base. The multi-axis arm is configured to pivotally move in multiple directions. The apparatus further includes, but is not limited to, a holding member that is coupled to the multi-axis arm. The holding member is configured to hold the tool in a position and while moving the tool by at least one of moving the movable base and pivotally moving the multi-axis arm.

In another non-limiting embodiment, the method includes, but is not limited to, holding the tool in a first position with a holding member of an apparatus. The apparatus includes, but is not limited to, a movable base, a multi-axis arm that is coupled to the movable base, and the holding member that is coupled to the multi-axis arm. The method further includes, but is not limited to, moving the tool by at least one of moving the movable base along a floor surface and pivotally moving the multi-axis arm in at least one direction.

### BRIEF DESCRIPTION OF THE DRAWINGS

The various embodiments will hereinafter be described in conjunction with the following drawing figures, wherein like numerals denote like elements, and wherein:
FIG. 1 illustrates a perspective view of an apparatus holding a tool in accordance with an exemplary embodiment;
FIG. 2 illustrates a side view of an apparatus holding a tool in accordance with an exemplary embodiment;
FIG. 3 illustrates a perspective view of an apparatus holding a tool that is being used for assembling a wire harness in accordance with an exemplary embodiment;
FIGS. 4A-4D illustrate various perspective views of an apparatus including a multi-axis arm that is being pivotably moved in accordance with an exemplary embodiment;
FIGS. 5A-5C illustrate various perspective views of an apparatus including a multi-axis arm that is being pivotably moved in accordance with an exemplary embodiment;
FIGS. 6A-6C illustrate various perspective views of an apparatus including a multi-axis arm that is being pivotably moved in accordance with an exemplary embodiment;
FIG. 7 illustrates a perspective front view of an apparatus including a multi-axis arm that is being pivotably moved in accordance with an exemplary embodiment;
FIG.8 illustrates a perspective view of an apparatus holding a tool that is performing a task for assembling a wire harness in accordance with an exemplary embodiment;
FIG.9 illustrates a perspective view of an apparatus holding a tool that is performing a task for assembling a wire harness in accordance with an exemplary embodiment;
FIG.10 illustrates a perspective view of an apparatus holding a tool that is performing a task for assembling a wire harness in accordance with an exemplary embodiment; and
FIG. 11 illustrates a method for using a tool for performing a task in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Various embodiments contemplated herein relate to apparatuses for holding a tool used for performing a task, and methods for using a tool to perform a task. The exemplary embodiments disclosed herein provide an apparatus that includes a movable base configured to move along a floor surface. A multi-axis arm is coupled to the movable base and is configured to pivotally move in multiple directions.

A holding member is coupled to the multi-axis arm. The holding member, supported by the multi-axis arm, is configured to hold the tool in a position and to hold the tool while moving the tool by moving the movable base along the floor and/or pivotally moving one or more arm sections of the multi-axis arm to readjust the position of the tool, for example to perform a task.

In an exemplary embodiment, advantageously the apparatus supports the weight of the tool as a tool is held in a position by the holding member. Further, advantageously when the tool is needed to be repositioned by a worker, the worker can easily move the tool with the weight of the tool being supported by the apparatus, for example, by moving the movable base along the floor to a desired assembly workspace area, and/or moving the tool by manually guiding the holding member with the tool to a desired position for performing the task. The latter thereby causing the multi-axis arm to pivotally move in response to the manually applied guiding force from the worker. Thus, even relatively heavy tools, such as pneumatic tools or the like, can be used with the assistance of the apparatus by workers for an extended period of time, for example up to 2 hours or more continuously, with minimal effort and without creating a significant ergonomic risk to the worker.

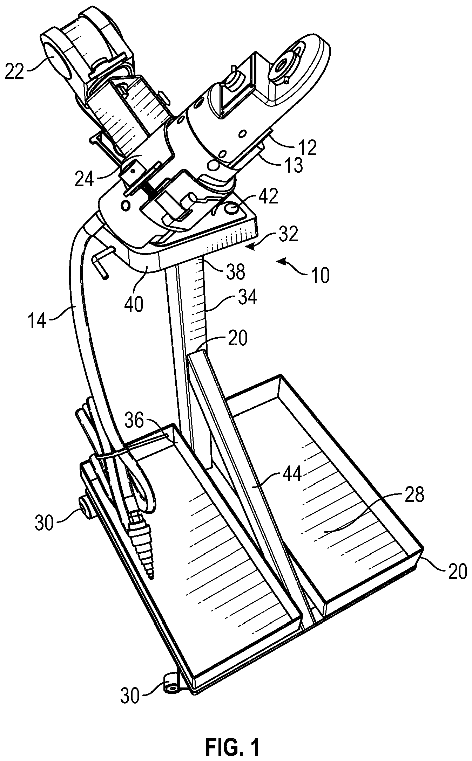

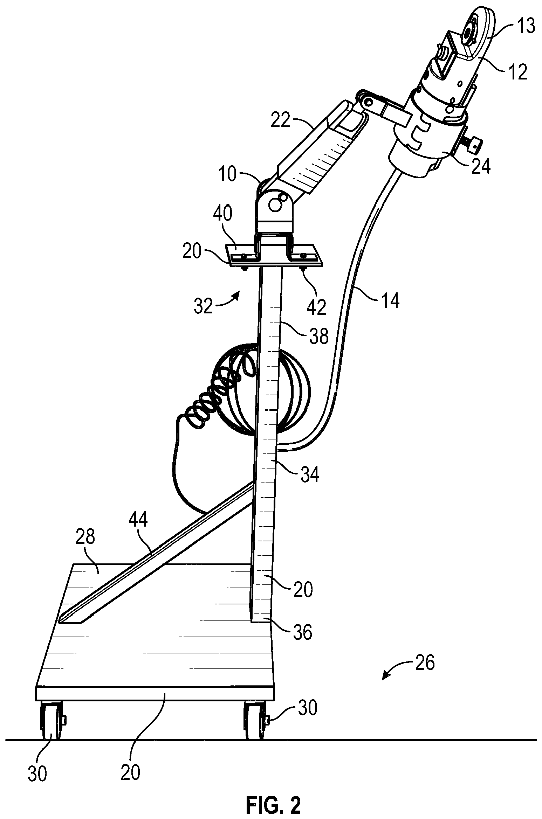

FIGS. 1-3 illustrate an apparatus 10 holding a tool 12 in accordance with an exemplary embodiment. As illustrated and will be discussed in further detail below, in an exemplary embodiment, the tool 12 is a hand-held size, pneumatic tool 13 that is couple to a compressed air line 14 that is in fluid communication with a compressed air source 16. The tool 12 is configured to perform a task, such as, for example, cutting wires, crimping electrical contacts to the wires, and/or crimping electrical connectors to the wires for assembly of wire harnesses, or alternatively for a task related to other components, subassemblies, assemblies or the like.

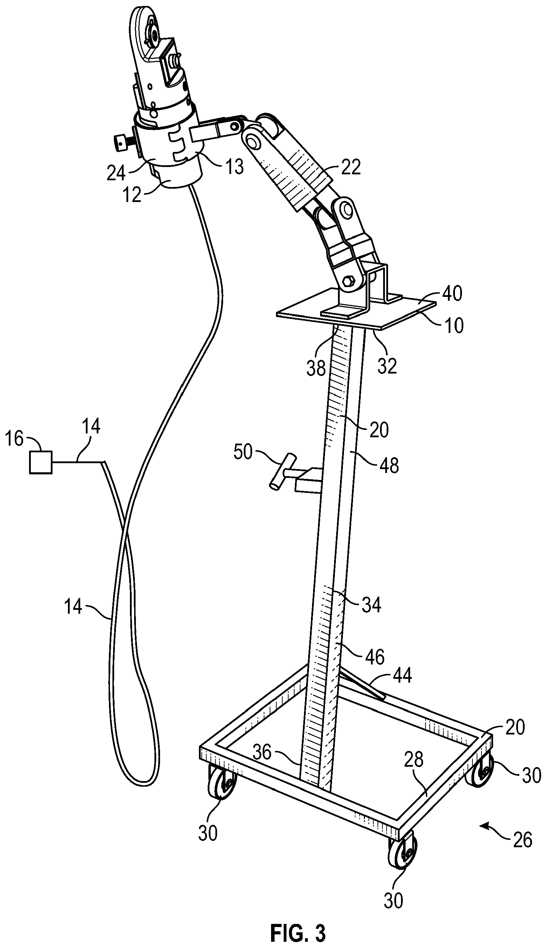

The apparatus 10 includes a movable base 20, a multi-axis arm 22 coupled to and supported by the movable base 20, and a holding member 24 coupled to the multi-axis arm 22. The movable base 20 is configured to move along a floor surface 26. In an exemplary embodiment, the movable base 20 includes a base structure 28 and a plurality of wheels 30 attached to the base structure 28 to facilitate moving along the floor surface 26. The base structure 28 may be configured as a plate as illustrated in FIGS. 1-2, a frame as illustrated in FIG. 3, or otherwise so as to couple to the wheels 30 and provide structure to support the remaining upper portions of the apparatus 10.

In an exemplary embodiment, the movable base 20 includes a platform 32 that supports the multi-axis arm 22 and that is coupled to and extends upright from the base structure 28. The platform 32 includes a support structure 34 having an end 36 coupled to the base structure 28. The support structure 34 extends substantially upright from the end 36 to an end 38 that is coupled to a platform plate 40. As illustrated, the multi-axis arm 22 is disposed on the upper surface of the platform plate 40 and is mounted thereon by a plurality of bolts 42 or other threaded fasteners.

In one example, the support structure 34 is configured as an elongated body (e.g., rod, post, pole, or the like) that extends between the ends 36 and 38. An angled brace 44 extends from the base structure 28 (e.g., at about 30° to about 60° angle, for example about 45° angle) to an intermediate section of the support structure 34 to stabilize and secure the support structure 34 in the substantially upright position. The platform plate 40 is positioned at the end 38 substantially horizontally and transverse to the longitudinal axis of the support structure 34.

In an exemplary embodiment, the support structure 34 is a telescopically adjustable support structure that allows for vertical displacement of the multi-axis arm 22. As illustrated, the support structure 34 includes a lower support section 46 and an upper support section 48 that is movably disposed in a channel of the lower support section 46 to move vertically relative to the lower support section 46 to vary the distance between the ends 36 and 38. As such, the support structure 34 can be vertically expanded or contracted to position and/or reposition the height of the platform plate 40 and the multi-axis arm 22 relative to the floor surface 26. In an exemplary embodiment, the support structure 34 includes a spring loaded member 50 (e.g., knob, lever, or the like) that when pulled or otherwise actuated allows the upper support section 48 to be moved relative to the lower support section 46 so that the height of the platform plate 40 can be adjusted. Once at a desired height, the spring loaded member 50 may be released thereby selectively fixing the position of the upper support structure 48 to the lower support structure 46 to secure the platform plate 40 in position at the desired height.

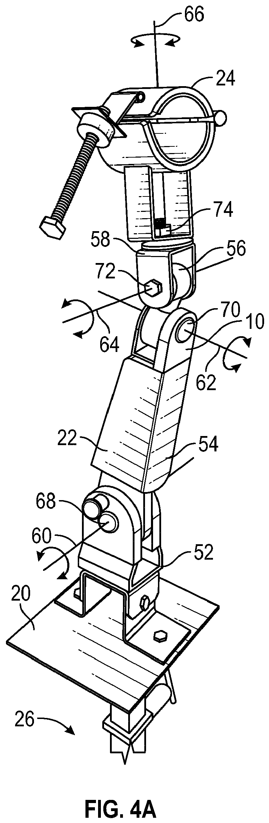

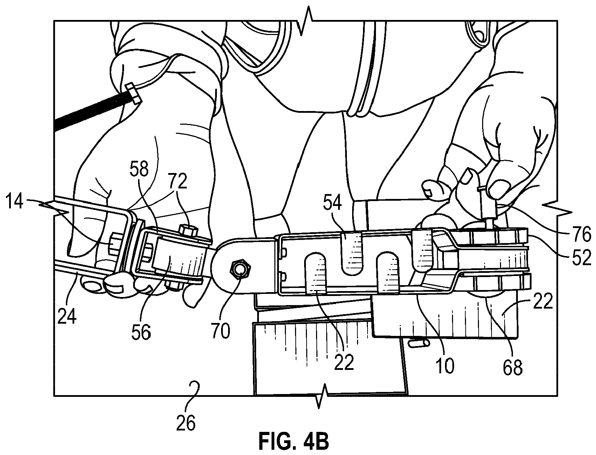

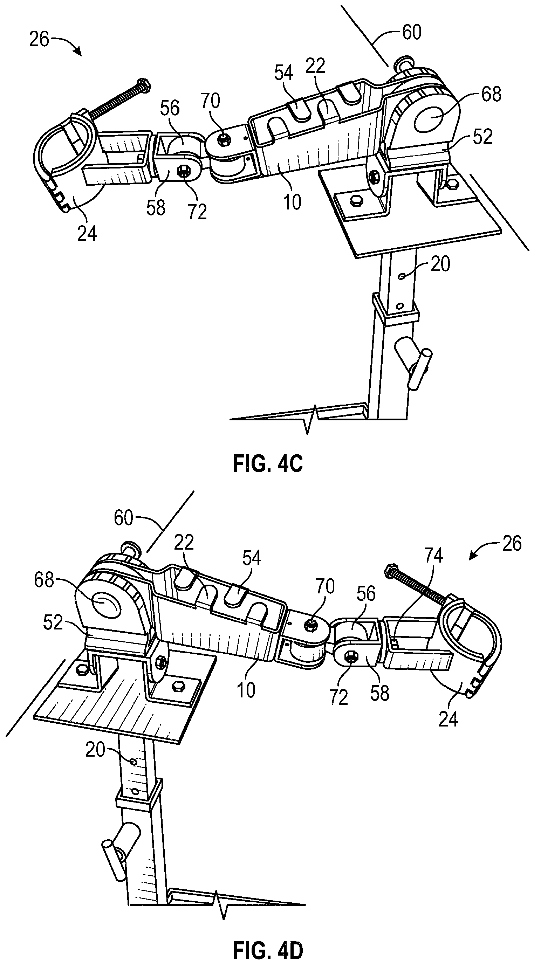

Referring to FIG. 4A, the multi-axis arm 22 includes a plurality of arm sections 52, 54, 56, and 58 that are pivotally coupled together such that the multi-axis arm 22 can be moved or otherwise manually guided in multiple directions. In an exemplary embodiment, the multi-axis arm 22 is a 4-axis movable arm configured to pivotally move independently about 4 axes 60, 62, 64, and 66. In particular and referring to FIGS. 4A-4D, the arm section 52, which is mounted, fastened or otherwise coupled to the platform plate 40 of the movable base 20, is pivotally coupled together with the arm section 54 by a joint 68. In an exemplary embodiment, the joint 68 allows the arm section 54 to pivotally move or otherwise rotate about the axis 60 from about 0 to about 180° relative to the arm section 52. Further, in an exemplary embodiment, the multi-axis arm 22 includes a locking member 76 (e.g., lever, knob, button, spring-loaded pin, or the like) that is operatively coupled to the multi-axis arm 22 and that may be manually actuated and released to selectively allow and prevent relative movement between the arm sections 52 and 54 (e.g., pivotable movement of the arm section 54 about the axis 60).

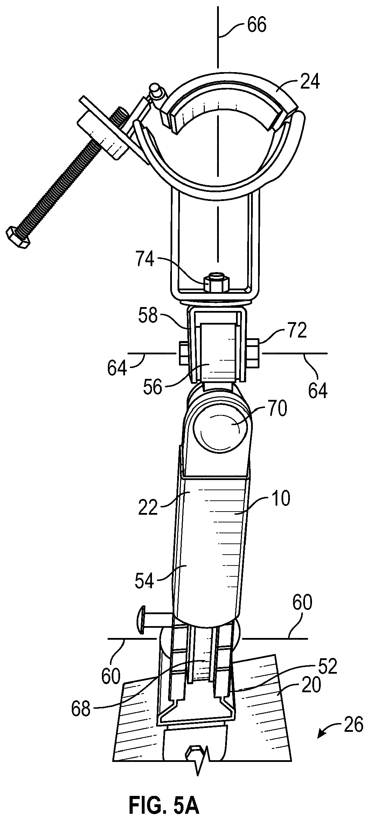

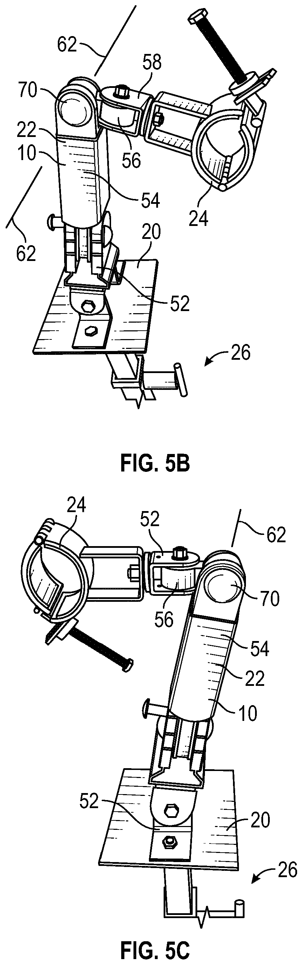

Referring to FIGS. 4A and 5A-5C, as illustrated, the arm section 54 is pivotally coupled to the arm section 56 by a joint 70. In an exemplary embodiment, the joint 70 allows the arm section 56 to pivotally move or otherwise rotate about the axis 62 from about 0 to about 270° relative to the arm section 54.

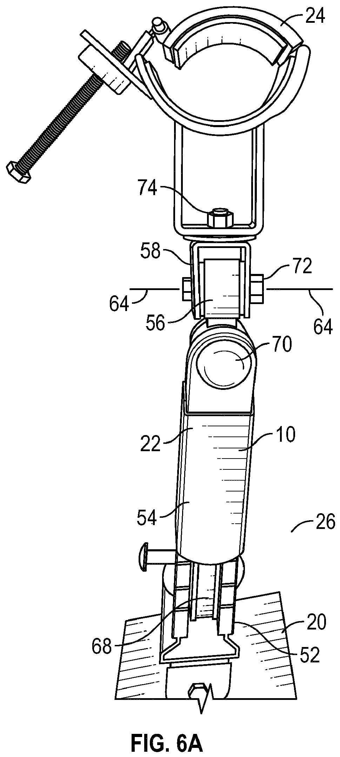

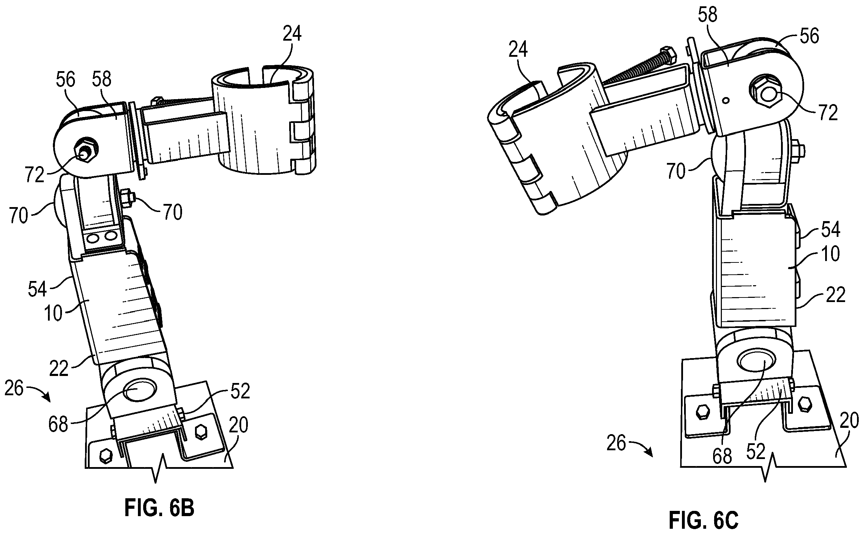

Referring to FIGS. 4A and 6A-6C, as illustrated, the arm section 56 is pivotally coupled to the arm section 58 by a joint 72. In an exemplary embodiment, the joint 72 allows the arm section 58 to pivotally move or otherwise rotate about the axis 64 from about 0 to about 270° relative to the arm section 56.

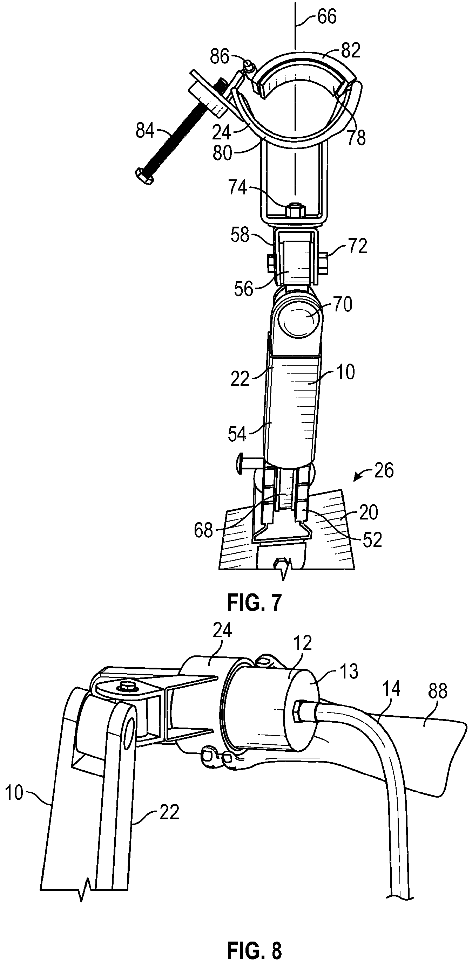

Referring to FIGS. 4A and 7, as illustrated, the holding member 24 is pivotally coupled to the arm section 58 by a joint 74. The longitudinal axis of the arm section 58 is aligned with the joint 74 and the axis 66. In an exemplary embodiment, the joint 74 allows the holding member 24 to rotate from about 0 to about 360° about the axis 66.

Referring to FIGS. 1-3 and 7, as discussed above, the holding member 24 is coupled to the multi-axis arm 22 and is configured to hold the tool 12. In an exemplary embodiment, the holding member 24 is configured as a "C-shaped" holder that at least partially surrounds an opening 78 that is sized or otherwise configured to receive the tool 12. In one example, the holding member 24 is adjustable to vary the size of the opening 78 by expanding the diameter or cross-sectional dimension(s) of the opening 78 to receive the tool 12 and by contracting or reducing the diameter or cross-sectional dimension(s) of the opening 78 so that the tool 12 is held securely in the holding member 24 against the inner surfaces of the sections 80 and 82 of the "C-shaped" holder.

Further, the holding member 24 includes fasteners 84 and 86 (e.g., bolt and nut, or the like) that are correspondingly coupled to end portions of the sections 80 and 82. The fasteners 84 and 86 are configured to adjustably engage each other to reduce the size of the opening 78 to press the inner surfaces of the sections 80 and 82 against the outer surface(s) of the tool 12, thereby holding the tool 12 securely in the holding member 24. Further, the fasteners 84 and 86 can be disengaged from each other to increase the size of the opening 78 for removing the tool 12.

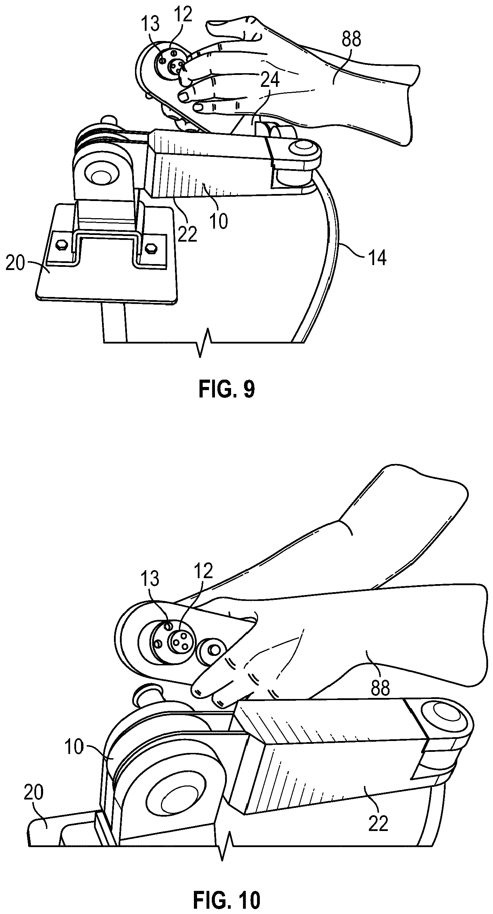

Referring to FIGS. 3 and 8-10, as discussed above, the holding member 24, supported by the multi-axis arm 22, holds the tool 12 in a stationary position, for example when the tool 12 is not being used or between use or performing a task, and further, while moving the tool 12 by moving the movable base 20 and/or pivotally moving the multi-axis arm 22. For example, the tool 12 can be moved by moving the movable base 20 horizontally along the floor surface 26 and/or adjusting the vertical height of the tool 12 using the spring-loaded member 50 to expand or contract the support structure 34 as discussed above.

As illustrated in FIGS. 8-10, the tool 12 can be manually moved or otherwise guided by a worker 88 who moves the tool 12 in the holding member 24 to a desired position to perform a task. The manually applied guiding force from the worker 88, translates from the tool 12/holding member 24 to the multi-axis arm 22, thereby causing the multi-axis arm 22 to pivotally move as discussed above in response to the force while still supporting the weight of the tool 12.

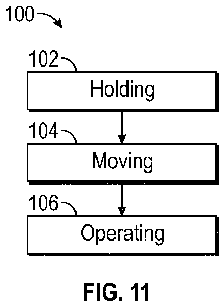

FIG. 11 illustrates a method 100 for using a tool for performing a task in accordance with an exemplary embodiment. The method includes holding (STEP 102) the tool in a first position with a holding member of an apparatus. The apparatus includes a movable base,
a multi-axis arm coupled to the movable base, and the holding member coupled to the multi-axis arm.

The tool is moved (STEP 104) by moving the movable base along a floor surface and/or pivotally moving the multi-axis arm in at least one direction. In an exemplary embodiment, moving the tool includes moving the tool to a second position. The method 100 further includes operating (STEP 106) the tool in the second position to perform the task. In an exemplary embodiment, the tool is a pneumatic tool and compressed air is provided to the pneumatic tool. Operating the tool includes actuating the pneumatic tool powered by the compressed air while in the second position to perform the task. In an exemplary embodiment, the tool performs the task of cutting wires, crimping electrical contacts to the wires, and/or crimping an electrical connector to the wires.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

The present disclosure may be further described by the following Aspects.

**Aspect 1.** An apparatus for holding a tool used for performing a task, the apparatus comprising:
a movable base configured to move along a floor surface;
a multi-axis arm coupled to the movable base and configured to pivotally move in multiple directions; and
a holding member coupled to the multi-axis arm and configured to hold the tool in a position and while moving the tool by at least one of moving the movable base and pivotally moving the multi-axis arm.

**Aspect 2.** The apparatus of Aspect 1, wherein the movable base comprises:
a base structure; and
a plurality of wheels attached to the base structure to facilitate moving the movable base along the floor surface.

**Aspect 3.** The apparatus of Aspect 2, wherein the movable base further comprises a platform that is coupled to and extends upright from the base structure, and wherein the multi-axis arm is disposed on the platform.

**Aspect 4.** The apparatus of Aspect 3, wherein the platform comprises:
a support structure that has a first end is coupled to the base structure and that extends substantially upright from the first end to a second end; and
a platform plate that is coupled to the second end of the support structure, wherein the multi-axis arm is mounted on the platform plate.

**Aspect 5.** The apparatus of Aspect 4, wherein the support structure is an adjustable support structure that is configured to be vertically expanded and contracted to vary a distance between the first and second ends for vertical displacement of the multi-axis arm.

**Aspect 6.** The apparatus of any one of Aspects 1-5, wherein the holding member is configured as a "C-shaped" holder that at least partially surrounds an opening that is adjustable in size to receive the tool and to hold the tool in the "C-shaped" holder.

**Aspect 7.** The apparatus of any one of Aspects 1-6, wherein the multi-axis arm is a 4-axis movable arm configured to pivotally move independently about 4 spaced apart axes.

**Aspect 8.** The apparatus of any one of Aspects 1-7, wherein the multi-axis arm comprises a first arm section and a second arm section that are pivotally coupled together by a first joint, wherein the first arm section is coupled to the movable base.

**Aspect 9.** The apparatus of Aspect 8, wherein the first joint is configured to allow the second arm section to pivotally move from about 0 to about 180° relative to the first arm section.

**Aspect 10.** The apparatus of Aspects 8 or 9, wherein the multi-axis arm further comprises a third arm section that is pivotally coupled to the second arm section by a second joint.

**Aspect 11.** The apparatus of Aspect 10, wherein the second joint is configured to allow the third arm section to pivotally move from about 0 to about 270° relative to the second arm section.

**Aspect 12.** The apparatus of Aspects 10 or 11, wherein the multi-axis arm further comprises a fourth arm section that is pivotally coupled to the third arm section by a third joint.

**Aspect 13.** The apparatus of Aspect 12, wherein the third joint is configured to allow the fourth arm section to pivotally move from about 0 to about 270° relative to the third arm section.

**Aspect 14.** The apparatus of Aspects 12 or 13, wherein the holding member is pivotally coupled to the fourth arm by a fourth joint.

**Aspect 15.** The apparatus of Aspect 14, wherein the fourth arm defines a longitudinal axis and the fourth joint is disposed along the longitudinal axis and is configured to allow the holding member to rotate from about 0 to about 360° about the longitudinal axis.

**Aspect 16.** The apparatus of any one of Aspects 8-15, wherein the multi-axis arm further comprises a locking member operatively coupled to the multi-axis arm to selectively prevent and allow relative movement between the first and second arm sections.

**Aspect 17.** A method for using a tool to perform a task, the method comprising the steps of:
holding the tool in a first position with a holding member of an apparatus, wherein the apparatus comprises:
   a movable base;
   a multi-axis arm coupled to the movable base; and
   the holding member coupled to the multi-axis arm;
moving the tool by at least one of moving the movable base along a floor surface and pivotally moving the multi-axis arm in at least one direction.

**Aspect 18.** The method of Aspect 17, wherein moving the tool comprises moving the tool to a second position, and wherein the method further comprises the step of:
operating the tool in the second position to perform the task.

**Aspect 19.** The method of Aspect 18, wherein the tool is a pneumatic tool, and wherein the method further comprises the step of:
providing compressed air to the pneumatic tool, and wherein operating the tool comprises actuating the pneumatic tool powered by the compressed air while in the second position to perform the task.

**Aspect 20.** The method of Aspect 19, wherein actuating the pneumatic tool comprises actuating the pneumatic to perform the task of at least one of cutting wires, crimping electrical contacts to the wires, and crimping an electrical connector to the wires.

## Claims

1. An apparatus for holding a tool used for performing a task, the apparatus comprising:
a movable base configured to move along a floor surface;
a multi-axis arm coupled to the movable base and configured to pivotally move in multiple directions; and
a holding member coupled to the multi-axis arm and configured to hold the tool in a position and while moving the tool by at least one of moving the movable base and pivotally moving the multi-axis arm.

2. The apparatus of claim 1, wherein the movable base comprises:
a base structure; and
a plurality of wheels attached to the base structure to facilitate moving the movable base along the floor surface.

3. The apparatus of claim 2, wherein the movable base further comprises a platform that is coupled to and extends upright from the base structure, and wherein the multi-axis arm is disposed on the platform.

4. The apparatus of claim 3, wherein the platform comprises:
a support structure that has a first end is coupled to the base structure and that extends substantially upright from the first end to a second end; and
a platform plate that is coupled to the second end of the support structure, wherein the multi-axis arm is mounted on the platform plate.

5. The apparatus of claim 4, wherein the support structure is an adjustable support structure that is configured to be vertically expanded and contracted to vary a distance between the first and second ends for vertical displacement of the multi-axis arm.

6. The apparatus of any one of claims 1-5, wherein the holding member is configured as a "C-shaped" holder that at least partially surrounds an opening that is adjustable in size to receive the tool and to hold the tool in the "C-shaped" holder.

7. The apparatus of any one of claims 1-6, wherein the multi-axis arm is a 4-axis movable arm configured to pivotally move independently about 4 spaced apart axes.

8. The apparatus of any one of claims 1-7, wherein the multi-axis arm comprises a first arm section and a second arm section that are pivotally coupled together by a first joint, wherein the first arm section is coupled to the movable base.

9. The apparatus of claim 8, wherein the multi-axis arm further comprises a third arm section that is pivotally coupled to the second arm section by a second joint.

10. The apparatus of claim 9, wherein the multi-axis arm further comprises a fourth arm section that is pivotally coupled to the third arm section by a third joint.

11. The apparatus of claim 10, wherein the holding member is pivotally coupled to the fourth arm by a fourth joint.

12. A method for using a tool to perform a task, the method comprising the steps of:
holding the tool in a first position with a holding member of an apparatus, wherein the apparatus comprises:
a movable base;
a multi-axis arm coupled to the movable base; and
the holding member coupled to the multi-axis arm;
moving the tool by at least one of moving the movable base along a floor surface and pivotally moving the multi-axis arm in at least one direction.

13. The method of claim 12, wherein moving the tool comprises moving the tool to a second position, and wherein the method further comprises the step of:
operating the tool in the second position to perform the task.

14. The method of claim 13, wherein the tool is a pneumatic tool, and wherein the method further comprises the step of:
providing compressed air to the pneumatic tool, and wherein operating the tool comprises actuating the pneumatic tool powered by the compressed air while in the second position to perform the task.

15. The method of claim 14, wherein actuating the pneumatic tool comprises actuating the pneumatic to perform the task of at least one of cutting wires, crimping electrical contacts to the wires, and crimping an electrical connector to the wires.
